# EUROPEAN PATENT APPLICATION

(11) **EP 4 797 652 A1**
(43) Date of publication of application: **26.08.2026**
(21) Application number: 24884465.6
(22) Date of filing: 18.10.2024
(51) Int. Cl.: H04L 47/283

(54) **DATA TRANSMISSION METHOD, APPARATUS AND SYSTEM**

(30) Priority: 31.10.2023 CN 202311440083
(71) Applicant: HUAWEI TECHNOLOGIES CO., LTD., Shenzhen 518129 (CN)
(72) Inventor: YOU, Chunhua, Shenzhen, Guangdong 518129 (CN); FAN, Qiang, Shenzhen, Guangdong 518129 (CN)
(74) Representative: Maiwald GmbH
(86) International application number: PCT/CN2024/125783
(87) International publication number: WO 2025/092461

(57) **Abstract**

This application provides a data transmission method and apparatus, and a system, pertaining to the communication field. The method is applied to a receiving device and includes: starting a first timer corresponds to a first data bearer; receiving N pieces of data from a sending device, where the N pieces of data belong to a first data set that corresponds to the first data bearer, and N is a positive integer; and when the first timer expires, synchronously delivering the N pieces of data. Based on the method and the foregoing technical solution, the receiving device synchronously delivers data in a data set corresponding to the first timer when the first timer expires. This helps ensure stability of transmission delay of the data set, avoid the issue of significant jitter in transmission delay among different data, and prevent triggering a congestion control operation, thereby improving service experience for users.

## Description

This application claims priority to Chinese Patent Application No. 202311440083.1, filed with the China National Intellectual Property Administration on October 31, 2023 and entitled "DATA TRANSMISSION METHOD AND APPARATUS, AND SYSTEM", which is incorporated herein by reference in its entirety.

### TECHNICAL FIELD

This application relates to the communication field, and specifically, to a data transmission method and apparatus, and a system.

### BACKGROUND

**In** recent years, quality of service requirements of new applications have grown increasingly stringent, making it difficult for existing wireless networks to meet the quality-of-service requirements of new services. For example, during data transmission in the existing wireless networks, there is significant jitter in data transmission delay, triggering a congestion control operation mechanism (for example, reducing the data bit rate), which in turn results in poor service experience.

### SUMMARY

This application provides a data transmission method and apparatus, and a system. In the method, a receiving device performs synchronized data delivery based on a timer. When the timer expires, data belonging to a same data set is synchronously delivered. Because the duration of the timer is deterministic, the moment at which the receiving device synchronously delivers the data is also deterministic. By delivering data simultaneously, this method mitigates the issue of significant jitter in data transmission delay, thereby preventing the triggering of a congestion control operation at the application layer and improving service experience for users.

According to a first aspect, a data transmission method is provided. The method is applied to a receiving device. The method includes: starting a first timer, where the first timer corresponds to a first data bearer; receiving N pieces of data from a sending device, where the N pieces of data belong to a first data set, the first data set corresponds to the first data bearer, and N is a positive integer; and when the first timer expires, synchronously delivering the N pieces of data.

For example, the data mentioned in embodiments of this application is also referred to as a packet, a data packet, a data unit, a protocol data unit (protocol data unit, PDU), or the like.

For example, when the receiving device is a terminal device, a duration of the first timer is indicated by using a first configuration message from a network device; and when the receiving device is a network device, a duration of the first timer is determined by using service characteristic information from a core network.

For example, the synchronously delivering the N pieces of data may also be understood as simultaneously sending the N pieces of data, simultaneously delivering the N pieces of data, delivering the N pieces of data together (or as a whole), or delivering the N pieces of data at a same moment.

It should be understood that the data bearer in embodiments of this application is used to carry a data transmission channel. Because quality of service of different services is different, different services correspond to different data bearers, and the different data bearers correspond to different timers. Therefore, the first timer corresponds to the first data bearer.

It should be understood that, based on a transmission mechanism of the method, the first timer is not started if there is a sequence number (sequence number, SN) gap in received data. In addition, regardless of whether there is an SN gap between the N pieces of data, the N pieces of data need to be delivered when the first timer expires, and the N pieces of data are synchronously delivered, instead of being sequentially delivered based on SNs of the data. This is essentially different from a PDCP layer data delivery mechanism in a conventional technology.

Based on the foregoing technical solution, the receiving device needs to synchronously deliver, when the first timer expires, data in a data set corresponding to the first timer. This helps ensure stability of the transmission delay of the data set, that is, avoid the issue of significant jitter in transmission delay among different data, and also prevents triggering a congestion control operation, thereby improving service experience for users.

With reference to the first aspect, in some implementations of the first aspect, when the receiving device is a terminal device, the first configuration message from the sending device is received, where the first configuration message indicates the duration of the first timer.

For example, the first configuration message may be a radio resource control (radio resource control, RRC) reconfiguration message, or another message for configuration.

Based on the foregoing technical solution, the duration of the first timer is indicated by using a conventional RRC reconfiguration, so that this method can be performed based on an existing communication system, to help reduce implementation difficulty of this method.

With reference to the first aspect, in some implementations of the first aspect, the N pieces of data include first data and second data, and when the first timer expires, the first data and the second data are synchronously delivered to an upper layer of the terminal device.

For example, the upper layer may be an application layer, a transport layer, or a non-access stratum (non-access stratum, NAS) of the terminal device.

Based on the foregoing technical solution, the receiving device needs to synchronously deliver, when the first timer expires, the N pieces of data received before the first timer expires, where the N pieces of data belong to the first data set. This helps ensure determinacy of delivery of the data in the first data set, avoid the issue of significant jitter in data transmission delay during data delivery, and prevent triggering a congestion control operation mechanism, thereby improve service experience for users.

With reference to the first aspect, in some implementations of the first aspect, when the receiving device is a network device, the service characteristic information from the core network is received, where the service characteristic information corresponds to the first data set; and the duration of the first timer is determined based on the service characteristic information.

It should be understood that the duration of the first timer should not be excessively long or excessively short. If the duration of the first timer is excessively long, a data transmission delay is increased. If the duration of the first timer is excessively short, the receiving device can receive only a part of data in the first data set at most.

With reference to the first aspect, in some implementations of the first aspect, the N pieces of data include first data and second data, and when the first timer expires, the first data and the second data are synchronously delivered to the core network.

Based on the foregoing technical solution, the receiving device needs to synchronously deliver, when the first timer expires, the N pieces of data received before the first timer expires, where the N pieces of data belong to the first data set. This helps ensure determinacy of delivery of the data in the first data set, and avoid the issue of significant jitter in data transmission delay during data delivery, and prevent triggering a congestion control operation mechanism, thereby improve service experience for users.

With reference to the first aspect, in some implementations of the first aspect, after the first timer expires, third data from the sending device is received, where the third data belongs to the first data set; and the third data is discarded.

Based on the foregoing technical solution, data that arrives late (for example, arrives after the first timer expires) is discarded, and a synchronization delivery process of a data set (for example, the first data set) to which the data belongs is not performed again, to ensure determinacy of delivery of the data set, and stabilize a transmission delay of the data set, so as to avoid significant jitter in data transmission delay.

With reference to the first aspect, in some implementations of the first aspect, after the first timer expires, it is determined that M pieces of data in the first data set have not been synchronously delivered; and first feedback information is sent to the sending device, where the first feedback information indicates that the M pieces of data have been successfully received.

For example, the first data set is used as an example. The first feedback information is acknowledgment (acknowledgment, ACK) information of the M pieces of data. Although the receiving device neither synchronously delivers the data nor receives the data, the receiving device sends the ACK information of the M pieces of data to the sending device, so that the sending device considers that the receiving device has determined that the data is received. In this way, the sending device does not retransmit the M pieces of data.

It should be understood that the receiving device not only sends the ACK information of the M pieces of data to the sending device, but also sends, to the sending device, ACK information of the N pieces of data that have been synchronously delivered.

Based on the foregoing technical solution, even if a data set corresponding to a timer is synchronously delivered after the timer expires, a synchronization delivery process of the data set is not performed again, even if data in the data set arrives late, for example, arrives after the timer expires. Therefore, the receiving device indicates, by using the first feedback information, that the late arrival data has been successfully received, so that the sending device does not retransmit the data, to avoid a waste of air interface resources. This helps ensure stability or determinacy of a delay, especially in a scenario in which cell resources are limited.

With reference to the first aspect, in some implementations of the first aspect, it is determined, based on identification information that is of the first data set and that is included in data headers corresponding to the N pieces of data, that the N pieces of data belong to the first data set.

For example, the identification information of the first data set is an SN of the first data set. When the data in the first data set is a PDU, the identification information of the first data set is an SN of a PDU set (set) of the first data set.

Based on the foregoing technical solution, a data header corresponding to data includes identification information of a data set, so that the receiving device can determine whether received data belongs to a same data set.

With reference to the first aspect, in some implementations of the first aspect, after the first timer expires, second feedback information is sent to the sending device, where the second feedback information indicates that the N pieces of data have been synchronously delivered.

For example, the first data set includes L pieces of data. Therefore, L is greater than or equal to N. When N=L, the second feedback information indicates that all the data in the first data set is synchronously delivered. When 0<N<L, the second feedback information indicates that the N pieces of data in the first data set are synchronously delivered. When N=0, the second feedback information indicates that none of the data in the first data set is synchronously delivered. When the receiving device is a terminal device, synchronous delivery indicated by using the second feedback information refers to synchronous delivery to the upper layer of the terminal device. When the receiving device is a network device, synchronous delivery indicated by using the second feedback information refers to synchronous delivery to the core network.

For example, the receiving device may send the second feedback information to the sending device at a moment when the N pieces of data are delivered.

For example, the sending device sends trigger indication information to the receiving device, where the trigger indication information indicates the receiving device to send a synchronization delivery status to the sending device. The receiving device sends the first feedback information to the sending device based on the trigger indication information. The trigger indication information includes identification information of a data bearer, and an identifier of the data bearer indicates the receiving device to send a synchronization delivery status of the data bearer to the sending device. The trigger indication information further includes identification information of a data set or a first threshold. The first threshold is used by the receiving device to determine whether to send the first feedback information to the sending device. If N is less than or equal to the first threshold, the receiving device sends the first feedback information to the sending device; or if N is greater than the first threshold, the receiving device does not send the first feedback information to the sending device. In a possible manner, the identification information of the data set indicates the receiving device to send a synchronization delivery status of a data set to the sending device. For example, if the identification information of the data set indicates a smallest SN of the data set, an SN of a data set included in the first feedback information is greater than or equal to the smallest SN of the data set (where the SN of the data set included in the feedback information includes an SN of the first data set). In another possible manner, the identification information of the data set is an identifier of the first data set.

For example, after receiving the second feedback information, the sending device determines or adjusts a corresponding transmission policy based on the second feedback information, where the transmission policy is a scheduling policy, to provide a proper data transmission condition for data transmission. Alternatively, the sending device reduces a data bit rate based on the second feedback information, to reduce a data amount and a quantity of pieces of data in a to-be-transmitted data set, so as to adapt to a current channel condition of data transmission.

Based on the foregoing technical solution, the receiving device sends the first feedback information to the sending device. The first feedback information is used to assist the sending device in adjusting the scheduling policy. For example, when the first feedback information indicates a small quantity of pieces of synchronously delivered data, the sending device adjusts the scheduling policy, to increase a transmission success rate of a subsequent data set, so as to ensure a stable (or jitter-free) delay for the subsequent data set.

With reference to the first aspect, in some implementations of the first aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the first aspect, in some implementations of the first aspect, the second feedback information further includes the identification information of the first data set.

With reference to the first aspect, in some implementations of the first aspect, a moment at which a 1^{st} piece of data in the first data set is received is determined as a start time of the first timer.

With reference to the first aspect, in some implementations of the first aspect, when the receiving device is a terminal device, a second configuration message from the sending device is received, where the second configuration message indicates a start time of the first timer.

With reference to the first aspect, in some implementations of the first aspect, when the receiving device is a network device, a start time of the first timer is determined based on the service characteristic information.

For example, the start time of the first timer is alternatively a slot, a subframe, a radio frame, or a timestamp.

Based on the foregoing technical solutions, the data transmission method provided in embodiments of this application is compatible with a periodic service and an aperiodic service, to improve applicability of the data transmission method provided in embodiments of this application.

According to a second aspect, a data transmission method is provided. The method is applied to a sending device. The method includes: sending L pieces of data to a receiving device, where the L pieces of data belong to a first data set; and receiving first feedback information from the receiving device, where the first feedback information indicates that N pieces of data have been synchronously delivered by the receiving device, the N pieces of data belong to the first data set, L and N are positive integers, and N is less than or equal to L.

With reference to the second aspect, in some implementations of the second aspect, when the sending device is a network device, a first configuration message is sent to the receiving device, where the first configuration message indicates duration of a first timer, and the first timer is configured to control the receiving device to synchronously deliver data in the first data set.

With reference to the second aspect, in some implementations of the second aspect, when the sending device is a network device, the receiving device is a terminal device, and the first feedback information indicates that the N pieces of data have been synchronously delivered by the terminal device to an upper layer of the terminal device.

With reference to the second aspect, in some implementations of the second aspect, when the receiving device is a network device, the first feedback information indicates that the N pieces of data are delivered by the network device to a core network.

With reference to the second aspect, in some implementations of the second aspect, data headers corresponding to the L pieces of data include identification information of the first data set.

With reference to the second aspect, in some implementations of the second aspect, the first feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the second aspect, in some implementations of the second aspect, the first feedback information further includes the identification information of the first data set.

With reference to the second aspect, in some implementations of the second aspect, when the sending device is a network device, a second configuration message is sent to the receiving device, where the second configuration message indicates a start time of the first timer.

With reference to the second aspect, in some implementations of the second aspect, the first timer corresponds to a data bearer of the first data set.

According to a third aspect, a downlink data transmission method is provided. The method is applied to a terminal device. The method includes: receiving a first configuration message from a network device, where the first configuration message indicates duration of a first timer; starting the first timer, where the first timer corresponds to a first data bearer; receiving N pieces of data from the network device, where the N pieces of data belong to a first data set, the first data set corresponds to the first data bearer, and N is a positive integer; and when the first timer expires, synchronously delivering the N pieces of data to an upper layer of the terminal device.

With reference to the third aspect, in some implementations of the third aspect, the N pieces of data include first data and second data, and when the first timer expires, the first data and the second data are synchronously delivered to the upper layer of the terminal device.

With reference to the third aspect, in some implementations of the third aspect, after the first timer expires, third data from the network device is received, where the third data belongs to the first data set; and the third data is discarded.

With reference to the third aspect, in some implementations of the third aspect, after the first timer expires, it is determined that M pieces of data in the first data set have not been synchronously delivered; and first feedback information is sent to the network device, where the first feedback information indicates that the M pieces of data have been successfully received.

With reference to the third aspect, in some implementations of the third aspect, it is determined, based on identification information that is of the first data set and that is included in data headers corresponding to the N pieces of data, that the N pieces of data belong to the first data set.

With reference to the third aspect, in some implementations of the third aspect, after the first timer expires, second feedback information is sent to the network device, where the second feedback information indicates that the N pieces of data have been synchronously delivered.

With reference to the third aspect, in some implementations of the third aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the third aspect, in some implementations of the third aspect, the second feedback information further includes the identification information of the first data set.

With reference to the third aspect, in some implementations of the third aspect, a moment at which a 1^{st} piece of data in the first data set is received is determined as a start time of the first timer.

With reference to the third aspect, in some implementations of the third aspect, a second configuration message from the network device is received, where the second configuration message indicates a start time of the first timer.

According to a fourth aspect, a downlink data transmission method is provided. The method is applied to a network device. The method includes: receiving service characteristic information from a core network, where the service characteristic information corresponds to a first data set; determining duration of a first timer based on the service characteristic information; sending a first configuration message to a terminal device, where the first configuration message indicates the duration of the first timer, and the first timer is configured to control the terminal device to synchronously deliver data in the first data set; and sending L pieces of data to the terminal device, where the L pieces of data belong to the first data set.

With reference to the fourth aspect, in some implementations of the fourth aspect, first feedback information from the terminal device is received, where the first feedback information indicates that M pieces of data have been successfully received, and the M pieces of data belong to the first data set.

With reference to the fourth aspect, in some implementations of the fourth aspect, second feedback information from the terminal device is received, where the second feedback information indicates that N pieces of data have been synchronously delivered by the terminal device, the N pieces of data belong to the first data set, and N is less than or equal to L.

With reference to the fourth aspect, in some implementations of the fourth aspect, a data transmission policy is adjusted based on the second feedback information, where the data transmission policy is related to a service corresponding to the first data set.

With reference to the fourth aspect, in some implementations of the fourth aspect, a second configuration message is sent to the terminal device, where the second configuration message indicates a start time of the first timer.

According to a fifth aspect, an uplink data transmission method is provided. The method is applied to a network device. The method includes: receiving service characteristic information from a core network, where the service characteristic information corresponds to a first data set; determining duration of a first timer based on the service characteristic information, where the first timer is configured to control a receiving device to synchronously deliver data in the first data set; starting the first timer; and receiving N pieces of data from a terminal device, where the N pieces of data belong to the first data set, and N is a positive integer; and when the first timer expires, synchronously delivering the N pieces of data.

With reference to the fifth aspect, in some implementations of the fifth aspect, the N pieces of data include first data and second data, and when the first timer expires, the first data and the second data are synchronously delivered to the core network.

With reference to the fifth aspect, in some implementations of the fifth aspect, after the first timer expires, third data from the terminal device is received, where the third data belongs to the first data set; and the third data is discarded.

With reference to the fifth aspect, in some implementations of the fifth aspect, after the first timer expires, it is determined that M pieces of data in the first data set have not been synchronously delivered; and first feedback information is sent to the terminal device, where the first feedback information indicates that the M pieces of data have been successfully received.

With reference to the fifth aspect, in some implementations of the fifth aspect, it is determined, based on identification information that is of the first data set and that is included in data headers corresponding to the N pieces of data, that the N pieces of data belong to the first data set.

With reference to the fifth aspect, in some implementations of the fifth aspect, after the first timer expires, second feedback information is sent to the terminal device, where the second feedback information indicates that the N pieces of data have been synchronously delivered.

With reference to the fifth aspect, in some implementations of the fifth aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the fifth aspect, in some implementations of the fifth aspect, the second feedback information further includes the identification information of the first data set.

With reference to the fifth aspect, in some implementations of the fifth aspect, a moment at which a 1^{st} piece of data in the first data set is received is determined as a start time of the first timer.

With reference to the fifth aspect, in some implementations of the fifth aspect, the first timer corresponds to a data bearer of the first data set.

According to a sixth aspect, an uplink data transmission method is provided. The method is applied to a terminal device. The method includes: sending M pieces of data to a network device, where the M pieces of data belong to a first data set; and receiving first feedback information from the network device, where the first feedback information indicates that N pieces of data have been synchronously delivered by the network device, the N pieces of data belong to the first data set, and N is less than or equal to L.

With reference to the sixth aspect, in some implementations of the sixth aspect, the first feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the sixth aspect, in some implementations of the sixth aspect, the first feedback information further includes identification information of the first data set.

With reference to the sixth aspect, in some implementations of the sixth aspect, second feedback information from the network device is received, where the second feedback information indicates that the M pieces of data have been successfully received, and the M pieces of data belong to the first data set.

With reference to the sixth aspect, in some implementations of the sixth aspect, a first timer corresponds to a data bearer of the first data set.

According to a seventh aspect, a data transmission apparatus is provided. The apparatus is used in a receiving device. The apparatus includes: an operation unit, configured to start a first timer, where the first timer corresponds to a first data bearer; a receiving unit, configured to receive N pieces of data from a sending device, where the N pieces of data belong to a first data set, the first data set corresponds to the first data bearer, and N is a positive integer; and a delivery unit, configured to: when the first timer expires, synchronously deliver the N pieces of data.

With reference to the seventh aspect, in some implementations of the seventh aspect, when the receiving device is a terminal device, the receiving unit is further configured to receive a first configuration message from the sending device, where the first configuration message indicates a duration of the first timer.

With reference to the seventh aspect, in some implementations of the seventh aspect, the N pieces of data include first data and second data, and the delivery unit is specifically configured to synchronously deliver the first data and the second data to an upper layer of the terminal device.

With reference to the seventh aspect, in some implementations of the seventh aspect, when the receiving device is a network device, the receiving unit is further configured to receive service characteristic information from a core network, where the service characteristic information corresponds to the first data set. The apparatus further includes a determining unit, and when the receiving device is a network device, the determining unit is configured to determine the duration of the first timer based on the service characteristic information.

With reference to the seventh aspect, in some implementations of the seventh aspect, the N pieces of data include first data and second data, and the delivery unit is specifically configured to synchronously deliver the first data and the second data to the core network.

With reference to the seventh aspect, in some implementations of the seventh aspect, the receiving unit is further configured to: after the first timer expires, receive third data from the sending device, where the third data belongs to the first data set; and the operation unit is further configured to discard the third data.

With reference to the seventh aspect, in some implementations of the seventh aspect, the determining unit is further configured to: after the first timer expires, determine that M pieces of data in the first data set have not been synchronously delivered. The apparatus further includes a sending unit, configured to send first feedback information to the sending device, where the first feedback information indicates that the M pieces of data have been successfully received.

With reference to the seventh aspect, in some implementations of the seventh aspect, the determining unit is further configured to determine, based on identification information that is of the first data set and that is included in data headers corresponding to the N pieces of data, that the N pieces of data belong to the first data set.

With reference to the seventh aspect, in some implementations of the seventh aspect, the sending unit is further configured to: after the first timer expires, send second feedback information to the sending device, where the second feedback information indicates that the N pieces of data have been synchronously delivered.

With reference to the seventh aspect, in some implementations of the seventh aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the seventh aspect, in some implementations of the seventh aspect, the second feedback information further includes the identification information of the first data set.

With reference to the seventh aspect, in some implementations of the seventh aspect, the determining unit is further configured to determine a moment at which a 1^{st} piece of data in the first data set is received as a start time of the first timer.

With reference to the seventh aspect, in some implementations of the seventh aspect, when the receiving device is a terminal device, the receiving unit is further configured to receive a second configuration message from the sending device, where the second configuration message indicates a start time of the first timer.

With reference to the seventh aspect, in some implementations of the seventh aspect, when the receiving device is a network device, the determining unit is further configured to determine a start time of the first timer based on the service characteristic information.

According to an eighth aspect, a data transmission apparatus is provided. The apparatus is used in a sending device. The apparatus includes: a sending unit, configured to send L pieces of data to a receiving device, where the L pieces of data belong to a first data set; and a receiving unit, configured to receive first feedback information from the receiving device, where the first feedback information indicates that N pieces of data have been synchronously delivered by the receiving device, the N pieces of data belong to the first data set, L and N are positive integers, and N is less than or equal to L.

With reference to the eighth aspect, in some implementations of the eighth aspect, when the sending device is a network device, the sending unit is further configured to send a first configuration message to the receiving device, where the first configuration message indicates duration of a first timer, and the first timer is configured to control the receiving device to synchronously deliver data in the first data set.

With reference to the eighth aspect, in some implementations of the eighth aspect, when the sending device is a network device, the receiving device is a terminal device, and the first feedback information indicates that the N pieces of data have been synchronously delivered by the terminal device to an upper layer of the terminal device.

With reference to the eighth aspect, in some implementations of the eighth aspect, when the receiving device is a network device, the first feedback information indicates that the N pieces of data are delivered by the network device to a core network.

With reference to the eighth aspect, in some implementations of the eighth aspect, data headers corresponding to the L pieces of data include identification information of the first data set.

With reference to the eighth aspect, in some implementations of the eighth aspect, the first feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the eighth aspect, in some implementations of the eighth aspect, the first feedback information further includes the identification information of the first data set.

With reference to the eighth aspect, in some implementations of the eighth aspect, when the sending device is a network device, the sending unit is further configured to send a second configuration message to the receiving device, where the second configuration message indicates a start time of the first timer.

With reference to the eighth aspect, in some implementations of the eighth aspect, the first timer corresponds to a data bearer of the first data set.

According to a ninth aspect, a downlink data transmission apparatus is provided. The apparatus is used in a terminal device. The apparatus includes: a receiving unit, configured to receive a first configuration message from a network device, where the first configuration message indicates duration of a first timer; an operation unit, configured to start the first timer, where the first timer corresponds to a first data bearer; a receiving unit, configured to receive N pieces of data from the network device, where the N pieces of data belong to a first data set, the first data set corresponds to the first data bearer, and N is a positive integer; and a delivery unit, configured to: when the first timer expires, synchronously deliver the N pieces of data to an upper layer of the terminal device.

With reference to the ninth aspect, in some implementations of the ninth aspect, the N pieces of data include first data and second data, and the delivery unit is specifically configured to: when the first timer expires, synchronously deliver the first data and the second data to the upper layer of the terminal device.

With reference to the ninth aspect, in some implementations of the ninth aspect, the operation unit is further configured to: after the first timer expires, receive third data from the network device, where the third data belongs to the first data set; and discard the third data.

With reference to the ninth aspect, in some implementations of the ninth aspect, the apparatus further includes: a determining unit, configured to: after the first timer expires, determine that M pieces of data in the first data set have not been synchronously delivered; and a sending unit, configured to send first feedback information to the network device, where the first feedback information indicates that the M pieces of data have been successfully received.

With reference to the ninth aspect, in some implementations of the ninth aspect, the determining unit is further configured to determine, based on identification information that is of the first data set and that is included in data headers corresponding to the N pieces of data, that the N pieces of data belong to the first data set.

With reference to the ninth aspect, in some implementations of the ninth aspect, the sending unit is further configured to: after the first timer expires, send second feedback information to the network device, where the second feedback information indicates that the N pieces of data have been synchronously delivered.

With reference to the ninth aspect, in some implementations of the ninth aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the ninth aspect, in some implementations of the ninth aspect, the second feedback information further includes the identification information of the first data set.

With reference to the ninth aspect, in some implementations of the ninth aspect, a moment at which a 1^{st} piece of data in the first data set is received is determined as a start time of the first timer.

With reference to the ninth aspect, in some implementations of the ninth aspect, the receiving unit is further configured to receive a second configuration message from the network device, where the second configuration message indicates a start time of the first timer.

According to a tenth aspect, a downlink data transmission method is provided. The method is applied to a network device. The apparatus includes: a receiving unit, configured to receive service characteristic information from a core network, where the service characteristic information corresponds to a first data set; a determining unit, configured to determine duration of a first timer based on the service characteristic information; and a sending unit, configured to: send a first configuration message to a terminal device, where the first configuration message indicates the duration of the first timer, and the first timer is configured to control the terminal device to synchronously deliver data in the first data set; and send L pieces of data to the terminal device, where the L pieces of data belong to the first data set.

With reference to the tenth aspect, in some implementations of the tenth aspect, the receiving unit is further configured to receive first feedback information from the terminal device, where the first feedback information indicates that M pieces of data have been successfully received, and the M pieces of data belong to the first data set.

With reference to the tenth aspect, in some implementations of the tenth aspect, the receiving unit is further configured to receive second feedback information from the terminal device, where the second feedback information indicates that N pieces of data have been synchronously delivered by the terminal device, the N pieces of data belong to the first data set, and N is less than or equal to L.

With reference to the tenth aspect, in some implementations of the tenth aspect, the apparatus further includes: an operation unit, configured to adjust a data transmission policy based on the second feedback information, where the data transmission policy is related to a service corresponding to the first data set.

With reference to the tenth aspect, in some implementations of the tenth aspect, the sending unit is further configured to send a second configuration message to the terminal device, where the second configuration message indicates a start time of the first timer.

According to an eleventh aspect, an uplink data transmission apparatus is provided. The apparatus is used in a network device. The apparatus includes: a receiving unit, configured to receive service characteristic information from a core network, where the service characteristic information corresponds to a first data set; a determining unit, configured to: determine duration of a first timer based on the service characteristic information, where the first timer is configured to control a receiving device to synchronously deliver data in the first data set; and start the first timer; a receiving unit, configured to receive N pieces of data from a terminal device, where the N pieces of data belong to the first data set, and N is a positive integer; and a delivery unit, configured to: when the first timer expires, synchronously deliver the N pieces of data.

With reference to the eleventh aspect, in some implementations of the eleventh aspect, the N pieces of data include first data and second data, and the delivery unit is specifically configured to: when the first timer expires, synchronously deliver the first data and the second data to the core network.

With reference to the eleventh aspect, in some implementations of the eleventh aspect, the receiving unit is further configured to: after the first timer expires, receive third data from the terminal device, where the third data belongs to the first data set; and discard the third data.

With reference to the eleventh aspect, in some implementations of the eleventh aspect, the determining unit is further configured to: after the first timer expires, determine that M pieces of data in the first data set have not been synchronously delivered. The apparatus further includes: a sending unit, configured to send first feedback information to the terminal device, where the first feedback information indicates that the M pieces of data have been successfully received.

With reference to the eleventh aspect, in some implementations of the eleventh aspect, the determining unit is further configured to determine, based on identification information that is of the first data set and that is included in data headers corresponding to the N pieces of data, that the N pieces of data belong to the first data set.

With reference to the eleventh aspect, in some implementations of the eleventh aspect, the sending unit is further configured to: after the first timer expires, send second feedback information to the terminal device, where the second feedback information indicates that the N pieces of data have been synchronously delivered.

With reference to the eleventh aspect, in some implementations of the eleventh aspect, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the eleventh aspect, in some implementations of the eleventh aspect, the second feedback information further includes the identification information of the first data set.

With reference to the eleventh aspect, in some implementations of the eleventh aspect, the determining unit is further configured to determine a moment at which a 1^{st} piece of data in the first data set is received as a start time of the first timer.

With reference to the eleventh aspect, in some implementations of the eleventh aspect, the first timer corresponds to a data bearer of the first data set.

According to a twelfth aspect, an uplink data transmission apparatus is provided. The apparatus is used in a terminal device. The apparatus includes: a sending unit, configured to send M pieces of data to a network device, where the M pieces of data belong to a first data set; and a receiving unit, configured to receive first feedback information from the network device, where the first feedback information indicates that N pieces of data have been synchronously delivered by the network device, the N pieces of data belong to the first data set, and N is less than or equal to L.

With reference to the twelfth aspect, in some implementations of the twelfth aspect, the first feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

With reference to the twelfth aspect, in some implementations of the twelfth aspect, the first feedback information further includes identification information of the first data set.

With reference to the twelfth aspect, in some implementations of the twelfth aspect, the receiving unit is further configured to receive second feedback information from the network device, where the second feedback information indicates that the M pieces of data have been successfully received, and the M pieces of data belong to the first data set.

With reference to the twelfth aspect, in some implementations of the twelfth aspect, a first timer corresponds to a data bearer of the first data set.

According to a thirteenth aspect, a data transmission apparatus is provided, including a processor and a memory. The processor is connected to the memory. The memory is configured to store program code, and the processor is configured to invoke the program code, to perform the method in any possible implementation of the method design in any one of the first aspect to the sixth aspect.

According to a fourteenth aspect, a chip is provided, including a processor. The processor is configured to perform the method in any possible implementation of the method design in any one of the first aspect to the sixth aspect.

According to a fifteenth aspect, a chip system is provided. The chip system is used in an electronic device. The chip system includes one or more interface circuits and one or more processors. The interface circuit and the processor are interconnected through a line. The interface circuit is configured to: echo a signal from a memory of the electronic device, and send the signal to the processor, where the signal includes computer instructions stored in the memory. When the processor executes the computer instructions, the electronic device performs the method in any possible implementation of the method design in any one of the first aspect to the sixth aspect.

According to a sixteenth aspect, a computer-readable storage medium is provided, storing a computer program or instructions. The computer program or the instructions are used to implement the method in any possible implementation of the method design in any one of the first aspect to the sixth aspect.

According to a seventeenth aspect, a computer program product is provided. When computer program code or instructions are executed on a computer, the computer is caused to perform the method in any possible implementation of the method design in any one of the first aspect to the sixth aspect.

For effects brought by the implementations corresponding to the second aspect to the seventeenth aspect, refer to descriptions of various implementations in the first aspect. Details are not described herein again.

### BRIEF DESCRIPTION OF DRAWINGS

FIG. 1 is a diagram of an architecture of a communication system 100 applicable to an embodiment of this application;
FIG. 2 is a schematic flowchart of a data transmission method 200 according to an embodiment of this application;
FIG. 3 is a diagram of data delivery in a data transmission method 200 according to an embodiment of this application;
FIG. 4 is a diagram of the running of a first timer according to an embodiment of this application;
FIG. 5 is a schematic flowchart of a data transmission method 500 according to an embodiment of this application;
FIG. 6 is a schematic flowchart of a downlink data transmission method 600 according to an embodiment of this application;
FIG. 7 is a schematic flowchart of a downlink data transmission method 700 according to an embodiment of this application;
FIG. 8 is a schematic flowchart of an uplink data transmission method 800 according to an embodiment of this application;
FIG. 9 is a schematic flowchart of an uplink data transmission method 900 according to an embodiment of this application;
FIG. 10 is a diagram of a data transmission apparatus 1000 according to an embodiment of this application; and
FIG. 11 is a diagram of a data transmission apparatus 1100 according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless fidelity (wireless fidelity, Wi-Fi) system, an ultra wideband (ultra wideband, UWB) system, a vehicle to everything (vehicle to everything, V2X) communication system, a device-to-device (device-to-device, D2D) communication system, an internet of vehicles communication system, a 5th generation (5th generation, 5G) mobile communication system, for example, a new radio (new radio, NR) system, and a future communication system, for example, a 6th generation (6th generation, 6G) mobile communication system.

Network elements in embodiments of this application include a server (cloud), a network device, and a terminal device.

In this embodiment of this application, the server (cloud) is configured to provide a device, for example, a control server and an application server, with a compute or application service for a service that requires integrity transmission.

In embodiments of this application, the network device may also be referred to as an access network (radio access network, RAN) node, an access network device, a RAN entity, an access node, or the like. The network device is located on a network side of the foregoing communication system, to help the terminal device implement wireless access. The network device is a device having a wireless transceiver function, or a chip or a chip system disposed in the device. The network device includes but is not limited to: a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The network device may be a macro base station, a micro base station, a pico base station, an indoor base station, a small cell, a balloon station, a relay station, a relay node, or a donor node, or an open radio access network (open radio access network, ORAN), or a radio controller in a centralized radio access network (centralized radio access network, CRAN) scenario. Optionally, the RAN node may alternatively be a server, a wearable device, a vehicle, a vehicle-mounted device, or the like. For example, an access network device in a V2X technology may be a roadside unit (roadside unit, RSU). All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or some functions of the network device.

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus for implementing a function of the network device may be the network device, or may be an apparatus, for example, a chip system, that can support the network device in implementing the function. The apparatus may be mounted in the network device or used in cooperation with the network device.

The terminal device in embodiments of this application is a terminal that accesses the foregoing communication system and has a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the method in this application by using the vehicle-mounted module, the vehicle-mounted assembly, the vehicle-mounted component, the vehicle-mounted chip, or the vehicle-mounted unit that is built in the vehicle.

In embodiments of this application, the network device and the terminal device implement a data transmission service based on a core network in the communication system in the foregoing example. The core network is a center of an entire communication network, and transmits, processes, and manages all signal data. In other words, the core network is configured to complete functions such as user registration, communication connection, and session management. The core network includes an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR) network element, a network repository function (network repository function, NRF) network element, an application function (application function, AF) network element, an access and mobility management function (access and mobility management function, AMF) network element, a session management function (session management function, SMF) network element, a RAN and user plane function (user plane function, UPF) network element, and the like.

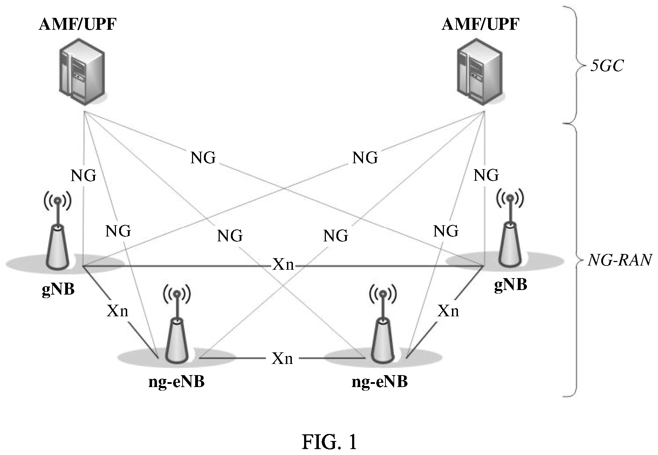

FIG. 1 is a diagram of an architecture of a communication system 100 applicable to an embodiment of this application.

Refer to FIG. 1. The communication system 100 is a 5G communication system mentioned in the foregoing embodiment. A RAN node in the communication system 100 includes a gNB or an ng-eNB. The gNB is configured to provide a termination point of an NR user plane and control plane protocol for a terminal device. The ng-eNB is configured to provide a termination point of an evolved access network (evolved UMTS terrestrial radio access network, E-UTRAN) user plane and control plane protocol stack for the terminal device. The gNB and the gNB, the gNB and the ng-eNB, and the ng-eNB and the ng-eNB are connected through an Xn interface. The gNB and the ng-eNB are connected to a 5G core network (5th generation core network, 5GC) through an NG interface. For example, the gNB and the ng-eNB are connected to an AMF through an NG-C interface, and are connected to a UPF through an NR-U interface.

It can be learned based on a downlink data delivery mechanism of a packet data convergence protocol (packet data convergence protocol, PDCP) layer that, after receiving data, the PDCP layer reorders the received data, and then sequentially delivers the data to an application layer. A data header corresponding to each piece of data includes a corresponding SN. Therefore, the in-order delivery refers to sequentially delivering data packets based on SNs thereof, for example, sequentially delivering the data packets in ascending order of the SNs. However, because time at which data arrives at a PDCP of a receiving device is not deterministic, delivery moments of different data are not deterministic. In addition, if SNs of received data are discontinuous, in other words, there is an SN gap, a timer (t-reordering) is started. If data corresponding to a missing SN is received before the timer expires, the data corresponding to the missing SN is delivered to the application layer. If the data corresponding to a position of the missing SN is still not received after the timer expires, the data corresponding to the position of the missing SN is ignored, and data following the gap is sequentially delivered to the application layer. It can be learned that time at which the PDCP layer delivers data is not deterministic, and therefore, there is significant jitter in data transmission delay from the perspective of the application layer.

In view of this, embodiments of this application provide a data transmission method and apparatus, and a system. In the method, a receiving device performs synchronized data delivery based on a timer. When the timer expires, data belonging to a same data set is synchronously delivered. Because the duration of the timer is deterministic, the moment at which the receiving device synchronously delivers the data is deterministic. By delivering data simultaneously, this method mitigates the issue of significant jitter in data transmission delay, thereby preventing the triggering of a congestion control operation at the application layer and improving service experience for users.

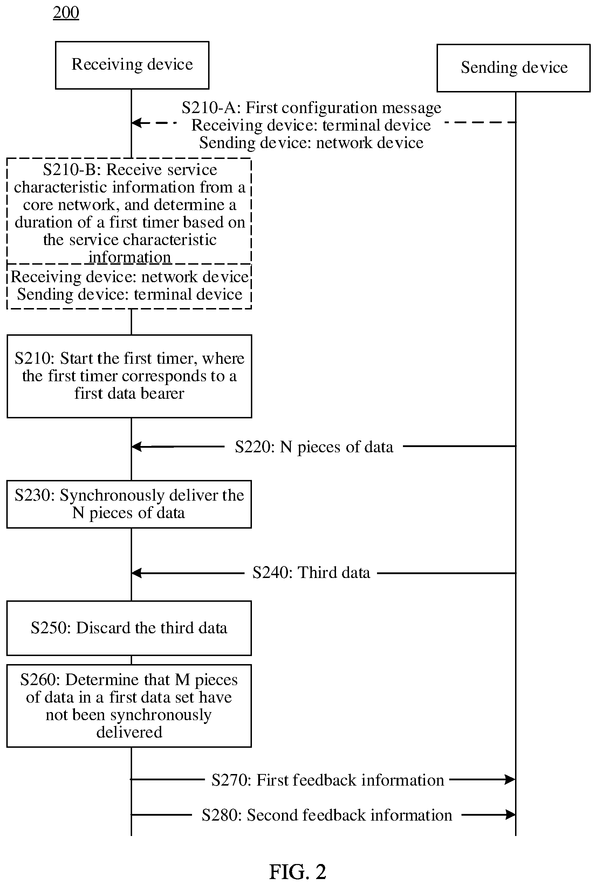

FIG. 2 is a schematic flowchart of a data transmission method 200 according to an embodiment of this application.

The method 200 is applied to a receiving device. In a downlink service, the receiving device may be a terminal device. In an uplink service, the receiving device may be a network device.

S210: Start a first timer, where the first timer corresponds to a first data bearer.

When the receiving device is a terminal device, a duration of the first timer is indicated by using a first configuration message from a network device. For details, refer to the following descriptions of step S210-A. When the receiving device is a network device, the duration of the first timer is determined by using service characteristic information from a core network. For details, refer to the following descriptions of step S210-B.

It should be noted that the duration of the first timer in this embodiment of this application may also be referred to as a timing periodicity of the first timer, a running periodicity of the first timer, a timing period of the first timer, or a periodicity of the first timer.

It should be understood that the data bearer in this embodiment of this application is used to carry a data transmission channel (for example, a channel for transmitting a first data set). Because feature information of different services is different, different services correspond to different data bearers, and the different data bearers correspond to different timers. Therefore, the first timer corresponds to the first data bearer.

S220: Receive N pieces of data from a sending device, where the N pieces of data belong to the first data set, the first data set corresponds to the first data bearer, and N is a positive integer.

It should be understood that the first data set includes the N pieces of data. Assuming that the first data bearer corresponds to a first service, and data in the first data set is data of the first service, the first data set corresponds to the first data bearer. Because the first timer corresponds to the first data bearer, the first timer also corresponds to the first data set.

In some possible manners, the N pieces of data include first data and second data. The first data and the second data may be received by the receiving device at a same moment during running of the first timer, or may be received at different moments during running of the first timer, for example, the receiving device first receives the first data and then receives the second data during running of the first timer. Therefore, data in the first data set may correspond to data generated in a same periodicity, or may correspond to data generated at a same moment.

In some possible manners, a data header corresponding to each of the N pieces of data includes identification information of the first data set. In this way, the receiving device can determine, based on the identification information, that the N pieces of data belong to the first data set.

In some possible manners, the data mentioned in embodiments of this application is also referred to as a packet, a data packet, a data unit, a PDU, or the like.

S230: When the first timer expires, synchronously deliver the N pieces of data.

It should be noted that the synchronously delivering the N pieces of data may also be understood as simultaneously sending the N pieces of data, simultaneously delivering the N pieces of data, delivering the N pieces of data together (or as a whole), or delivering the N pieces of data at a same moment.

In some possible manners, services in a plurality of data bearers can be performed in parallel, and data that is transmitted in parallel based on the plurality of data bearers may be synchronously delivered based on the method 200.

In some possible manners, FIG. 2 shows a process of delivering the first data set. Because the first data bearer is further used to transmit data in another data set, the method 200 provided in this embodiment of this application and subsequent implementations extended from the method 200 are also applicable to transmitting the data in the another data set. In addition, the method 200 provided in this embodiment of this application and the subsequent implementations extended from the method 200 are also applicable to a service in another data bearer.

For example, the receiving device receives M pieces of data before a first timer A expires. The M pieces of data include data 1, data 2, data 3, and data 4. Data headers respectively corresponding to the data 1, the data 2, and the data 3 each include identification information (namely, same identification information) of a first data set. In addition, the receiving device determines that the first timer A corresponds to the first data set. A data header corresponding to the data 4 includes identification information of a second data set, and the second data set corresponds to a second data bearer. It can be learned that the data 1, the data 2, and the data 3 belong to the first data set, and the data 4 does not belong to the first data set. In this case, after the first timer A expires, the data 1, the data 2, and the data 3 are synchronously delivered. For the data 4, the receiving device determines that a first timer B corresponds to the second data bearer, and then determines that the first timer B corresponds to the second data set. In this case, after the first timer B expires, the terminal device synchronously delivers the data 4.

Based on the foregoing technical solution, the receiving device needs to synchronously deliver, when the first timer expires, data in a data set corresponding to the first timer. This helps ensure stability of the transmission delay of the data set, that is, avoid the issue of significant jitter in transmission delay among different data, and also prevent triggering a congestion control operation, thereby improving service experience for users.

In some possible manners, in a downlink data transmission scenario, the receiving device is a terminal device, and the sending device is a network device. In this case, before S210, the following operation is further performed.

S210-A: The terminal device receives the first configuration message from the network device, where the first configuration message indicates the duration of the first timer.

In some possible manners, the network device determines the duration of the first timer based on the service characteristic information. The service characteristic information corresponds to the first data bearer, and the service characteristic information may be a data generation periodicity of the network device, a data sending periodicity, or an arrival model of data sent by the network device. Then, the duration of the first timer is sent to the terminal device by using the first configuration message. Specifically, the first configuration message includes first indication information, and the first indication information indicates the duration of the first timer.

The first configuration message may be an RRC reconfiguration message or another message used for configuration.

In some possible manners, the N pieces of data include first data and second data. In this case, when the first timer expires, a lower layer of the terminal device synchronously delivers the first data and the second data to an upper layer. The upper layer may be an application layer, a transport layer, or a NAS of the terminal device, and the lower layer includes a PDCP layer of the terminal device.

For example, for the downlink service, the terminal device receives data from the network device. The data is first received at a physical layer of the terminal device, and then sequentially undergoes data processing at a MAC layer and an RLC layer. The RLC layer sends processed data to the PDCP layer, where the processed data includes first data and second data. The method 200 provided in this embodiment of this application may be performed at the PDCP layer of the terminal device. When the first timer expires, the PCDP layer synchronously delivers the first data and the second data to the upper layer.

In some possible manners, in an uplink data transmission scenario, the receiving device is a network device. In this case, before S210, the following operation is further performed.

S210-B: The network device receives the service characteristic information from the core network, and determines the duration of the first timer based on the service characteristic information.

In some possible manners, the N pieces of data include first data and second data. Therefore, when the first timer expires, the network device synchronously delivers the first data and the second data to the core network.

The network device synchronously delivers the first data and the second data to a network element (for example, a UPF) of the core network.

It should be understood that the service characteristic information may include a periodicity or delay budget information of data. Therefore, the duration of the first timer corresponds to the service characteristic information (for example, the periodicity is longer than or equal to the duration of the first timer).

In some possible manners, the method 200 further includes the following steps.

S240: After the first timer expires, receive third data from the sending device, where the third data belongs to the first data set.

S250: Discard the third data.

Based on the foregoing technical solution, data that arrives late (for example, arrives after the first timer expires) is discarded, and a synchronization delivery process of a data set (for example, the first data set) to which the data belongs is not performed again, to ensure determinacy of delivery of the data set, and stabilize transmission delay of the data set, so as to avoid significant jitter in data transmission delay.

In some possible manners, the method 200 further includes the following steps.

S260: After the first timer expires, determine that M pieces of data in the first data set have not been synchronously delivered.

In some possible manners, the M pieces of data include the third data.

S270: Send first feedback information to the sending device, where the first feedback information indicates that the M pieces of data have been successfully received.

In some possible manners, the receiving device may determine, by using the following method, that the M pieces of data have not been synchronously delivered.

It should be understood that the M pieces of data and the N pieces of data are different data, and a total quantity of pieces of data in the first data set is L, where M+N is less than or equal to L.

It can be learned from the foregoing descriptions that, actually, the receiving device does not receive the M pieces of data, but still sends the first feedback information to the sending device, so that the sending device no longer sends the M pieces of data. In this way, radio resource utilization is improved, and a transmission requirement of a service is ensured.

In a possible manner, before the first timer expires, the receiving device receives the N pieces of data and data headers corresponding to the N pieces of data. The N pieces of data belong to the first data set, that is, the data headers corresponding to the N pieces of data include the identification information of the first data set. For example, the identification information of the first data set is an SN of the first data set. When the first timer expires, the receiving device synchronously delivers the N pieces of data. After the first timer expires, the receiving device receives data A. The data A is different from the N pieces of data, and a data header corresponding to the data A includes an identifier of the first data set. In this case, the receiving device can determine that the data in the first data set has been synchronously delivered, and the receiving device needs to send the first feedback information to the sending device, where the first feedback information indicates that the data A has been successfully received.

In another possible manner, before the first timer expires, the receiving device receives the N pieces of data and data headers corresponding to the N pieces of data. The N pieces of data belong to the first data set, that is, the data headers corresponding to the N pieces of data include the identification information of the first data set, that is, a start SN and an end SN of data in the first data set. In this way, the receiving device can determine all data SNs corresponding to the first data set. Assuming that the start SN of the data in the first data set is 001 and the end SN is 008, the receiving device can determine that the first data set includes eight pieces of data, and determine SNs respectively corresponding to the eight pieces of data. Assuming that N=4, and the N pieces of data include data A (SN=001), data B (SN=002), data C (SN=004), and data D (SN=006), the receiving device synchronously delivers the N pieces of data, determines data that is in the first data set and that is not synchronously delivered, that is, data whose SNs are 003, 005, 007, and 008, and then sends the first feedback information to the sending device. In this case, the first feedback information indicates that the four pieces of data that have not been synchronously delivered have been successfully received. It can be learned from the foregoing descriptions that, although the data whose SNs are 003, 005, 007, and 008 has not been received by the receiving device, a synchronization delivery operation on the first data set has been completed, and the receiving device does not perform the synchronization delivery operation on the data again. If data whose SN is 004 is received after the N pieces of data are synchronously delivered, the receiving device needs to discard the data. Although the data is discarded, the receiving device needs to feed back, to the sending device by using the first feedback information, that the data is successfully received.

In some possible manners, the first data set is used as an example. The first feedback information may be ACK information of the M pieces of data. Although the receiving device neither synchronously delivers the data nor receives the data, the receiving device sends the ACK information of the M pieces of data to the sending device, so that the sending device considers that the receiving device has determined that the data is received. In this way, the sending device does not retransmit the M pieces of data.

It should be understood that the receiving device not only sends the ACK information of the M pieces of data to the sending device, but also sends ACK information of the N pieces of data to the sending device.

Based on the foregoing technical solution, even if a data set corresponding to a timer is synchronously delivered after the timer expires, a synchronization delivery process of the data set is not performed again, even if data in the data set arrives late, for example, arrives after the timer expires. Therefore, the receiving device indicates, by using the first feedback information, that the late arrival data has been successfully received, so that the sending device does not retransmit the data, to avoid a waste of air interface resources. This helps ensure stability or determinacy of a delay, especially in a scenario in which cell resources are limited.

In some possible manners, after the first timer expires, the receiving device further performs the following operation.

S280: Send second feedback information to the sending device, where the second feedback information indicates that the N pieces of data have been synchronously delivered.

In some possible manners, the sending device sends trigger indication information to the receiving device, where the trigger indication information indicates the receiving device to send a synchronization delivery status to the sending device. The receiving device sends the second feedback information to the sending device based on the trigger indication information. The trigger indication information includes identification information of a data bearer, and the identification information of the data bearer indicates the receiving device to send a synchronization delivery status of the data bearer to the sending device. The trigger indication information further includes identification information of a data set or a first threshold. The first threshold is used by the receiving device to determine whether to send the second feedback information to the sending device. If N is less than or equal to the first threshold, the receiving device sends the second feedback information to the sending device; or if N is greater than the first threshold, the receiving device does not send the second feedback information to the sending device. In a possible implementation, the identification information of the data set indicates the receiving device to send a synchronization delivery status of at least one data set to the sending device. For example, if the identification information of the data set indicates a smallest SN of the data set, an SN of a data set included in the second feedback information is greater than or equal to the smallest SN of the data set (where the SN of the data set in the feedback information includes an SN of the first data set). In another possible implementation, the identification information of the data set is an identifier of the first data set.

It should be noted that synchronous delivery of data indicates that the data is successfully received in time, and means that the data is successfully received before the first timer expires.

For example, the first data set includes L pieces of data. Therefore, L is greater than or equal to N. When N=L, the second feedback information indicates that all the data in the first data set is synchronously delivered. When 0<N<L, the second feedback information indicates that the N pieces of data in the first data set are synchronously delivered. When N=0, the second feedback information indicates that none of the data in the first data set is synchronously delivered. When the receiving device is a terminal device, synchronous delivery indicated by using the second feedback information refers to synchronous delivery to the upper layer of the terminal device. When the receiving device is a network device, synchronous delivery indicated by using the second feedback information refers to synchronous delivery to the core network.

In some possible manners, the receiving device may send the second feedback information to the sending device at a moment when the N pieces of data are delivered, and then no longer repeatedly sends the second feedback information.

In some possible manners, after receiving the second feedback information, the sending device determines or adjusts a corresponding transmission policy based on the second feedback information, where the transmission policy is a scheduling policy, to provide a proper data transmission condition for data transmission. Alternatively, the sending device reduces a data bit rate based on the second feedback information, to reduce a data amount and a quantity of pieces of data in a to-be-transmitted data set, so as to adapt to a current channel condition of data transmission.

In some possible manners, the second feedback information includes a value of N, a data amount of the N pieces of data, a quantity (namely, L-N) of pieces of undelivered data in the first data set, or ratio information of synchronously delivered data in the first data set, where the ratio information indicates a proportion (namely, N/L) of N to a total quantity of pieces of data in the first data set.

In some possible manners, an example in which the data in the first data set is delivered is used. The second feedback information further includes the identification information of the first data set.

Based on the foregoing technical solution, the receiving device sends the second feedback information to the sending device, so that the sending device learns whether all data in a data set is successfully received in time or is synchronously delivered. The second feedback information is used to assist the sending device in adjusting the scheduling policy. For example, when the second feedback information indicates a small quantity of pieces of synchronously delivered data, the sending device adjusts the scheduling policy, to increase a transmission success rate of a subsequent data set, so as to ensure a stable (or jitter-free) delay for the subsequent data set.

In some possible manners, a start time of the first timer may be determined by using the following method.

For a periodic service, the receiving device periodically starts the first timer.

When the receiving device is a terminal device, the start time of the first timer is indicated by using a second configuration message delivered by the network device. The start time includes a service periodicity and a start location. The service periodicity indicates a periodicity in which the sending device sends data, and the service periodicity needs to be longer than or equal to the timing periodicity of the first timer. The start location is a start time of a 1^{st} timing periodicity of the first timer. Similar to the first configuration message, the second configuration message may also include second indication information, and the second indication information indicates the start time of the first timer.

In some possible manners, the second configuration message may belong to the first configuration message.

When the receiving device is a network device, when determining the duration of the first timer based on the service characteristic information, the network device further determines a start time of the first timer.

It should be understood that, in a periodic service, a start time of a 1^{st} timing periodicity of the first timer corresponds to the start of a 1^{st} service periodicity, and after the 1^{st} timing periodicity of the first timer expires, the first timer automatically restarts at the start of a 2^{nd} service periodicity.

For an aperiodic service, the terminal device starts the first timer when receiving a 1^{st} piece of data from the first data bearer. For example, the terminal device determines a moment at which a 1^{st} piece of data in the first data set is received as the start time of the first timer.

For the aperiodic service, the network device starts the first timer when receiving a 1^{st} piece of data from the first data bearer. For example, the network device determines a moment at which a 1^{st} piece of data in the first data set is received as the start time of the first timer.

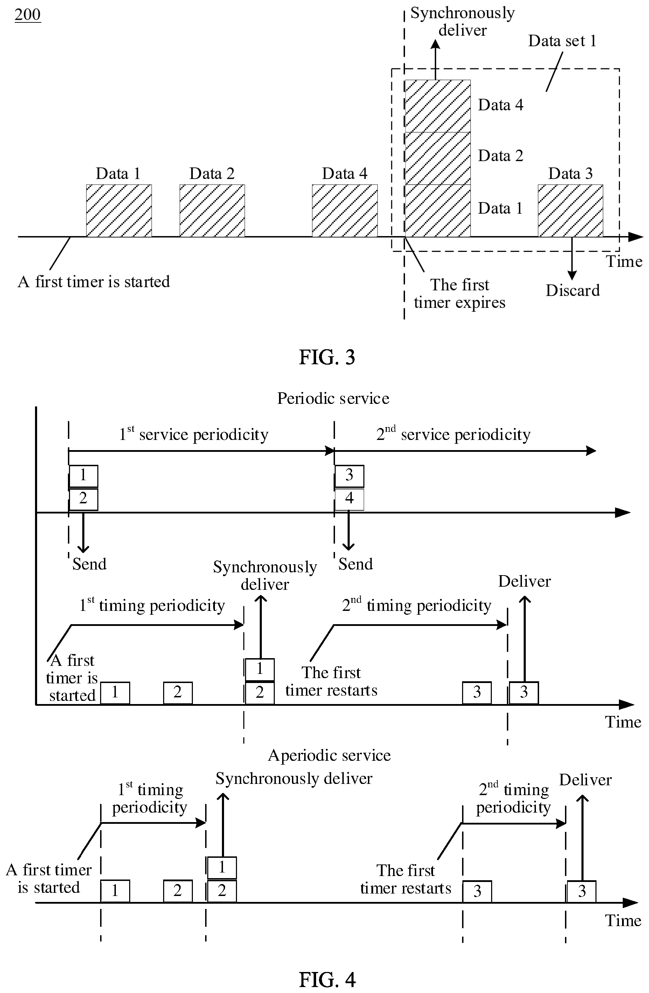

FIG. 3 is a diagram of data delivery in a data transmission method 200 according to an embodiment of this application.

As shown in FIG. 3, when a plurality of pieces of data (N>1), for example, data 1, data 2, and data 4, are synchronously delivered in S230, a transmission mechanism in the method 200 ensures that the first timer is not started if there is an SN gap in received data. In addition, regarding a specific delivery mechanism, when the first timer expires, the receiving device delivers the data synchronously rather than sequentially. Furthermore, for data 3 received after the first timer expires, the receiving device discards the data 3 instead of delivering the data 3. It should be noted that the data 1, the data 2, the data 3, and the data 4 belong to a same data set, for example, a data set 1, and the data set 1 corresponds to the first timer. This is fundamentally different from a PDCP layer data delivery mechanism in a conventional technology. According to the PDCP layer data delivery mechanism in the conventional technology, when there is no SN gap in received data, the PDCP layer delivers the data in order and sequentially; and when there is an SN gap in the received data, the PDCP layer starts a reordering timer to wait for data corresponding to the missing SN to be supplemented, and after the timer expires, even if the missing SN is not filled, the PDCP layer skips the missing SN and continues to deliver the data in order and sequentially. Therefore, the data is not synchronously delivered, and from the perspective of the application layer, there is jitter in transmission delay during data delivery.

FIG. 4 is a diagram of the running of a first timer according to an embodiment of this application.

Referring to the periodic service scenario shown in FIG. 4, a start time of a 1^{st} timing periodicity of the first timer is pre-determined by the receiving device in the manner described in the foregoing embodiment, and the start time of the 1^{st} timing periodicity of the first timer corresponds to the start of a 1^{st} service periodicity. In the 1^{st} timing periodicity of the first timer, the receiving device receives data 1 and data 2, where the data 1 and the data 2 belong to a first data set. When the 1^{st} timing periodicity expires, the data 1 and the data 2 are synchronously delivered. Then, the first timer automatically restarts at the start of a 2^{nd} service periodicity, entering a 2^{nd} timing periodicity. In the 2^{nd} periodicity of the first timer, the receiving device receives data 3, where the data 3 belongs to the first data set. When the 2^{nd} timing periodicity expires, the data 3 is delivered. Referring to FIG. 4, it can be learned that the sending device sends the data 3 and data 4 in the 2^{nd} service periodicity. Even if the receiving device does not receive the data 4 in time, the data 3 still needs to be delivered upon expiration of the 2^{nd} timing periodicity of the first timer. The same logic applies to a subsequent timing periodicity of the first timer.

Referring to the aperiodic service scenario in FIG. 4, the first timer does not automatically restart after expiration. At a moment when the receiving device receives a 1^{st} piece of data (data 1) through a corresponding data bearer, the first timer enters a 1^{st} timing periodicity. In the 1^{st} timing periodicity of the first timer, the receiving device receives data 1 and data 2, where the data 1 and the data 2 belong to a first data set. When the 1^{st} timing periodicity expires, the data 1 and the data 2 are synchronously delivered. Then, the first timer stops running. After that, at a moment when the receiving device receives a 1^{st} piece of data (data 3) through a corresponding bearer, the first timer restarts, entering a 2^{nd} timing periodicity. In the 2^{nd} periodicity of the first timer, the receiving device receives data 3, where the data 3 belongs to the first data set. When the 2^{nd} timing periodicity expires, the data 3 is delivered. The same logic applies to a subsequent timing periodicity of the first timer.

In some possible manners, the start time of the first timer is alternatively a slot, a subframe, a radio frame, or a timestamp.

Based on the foregoing technical solutions, the data transmission method provided in embodiments of this application is compatible with a periodic service and an aperiodic service, to improve applicability of the data transmission method.

Correspondingly, an embodiment of this application provides a data transmission method. The method is applied to a sending device. In a downlink service, the sending device is a network device. In an uplink service, the sending device is a terminal device.

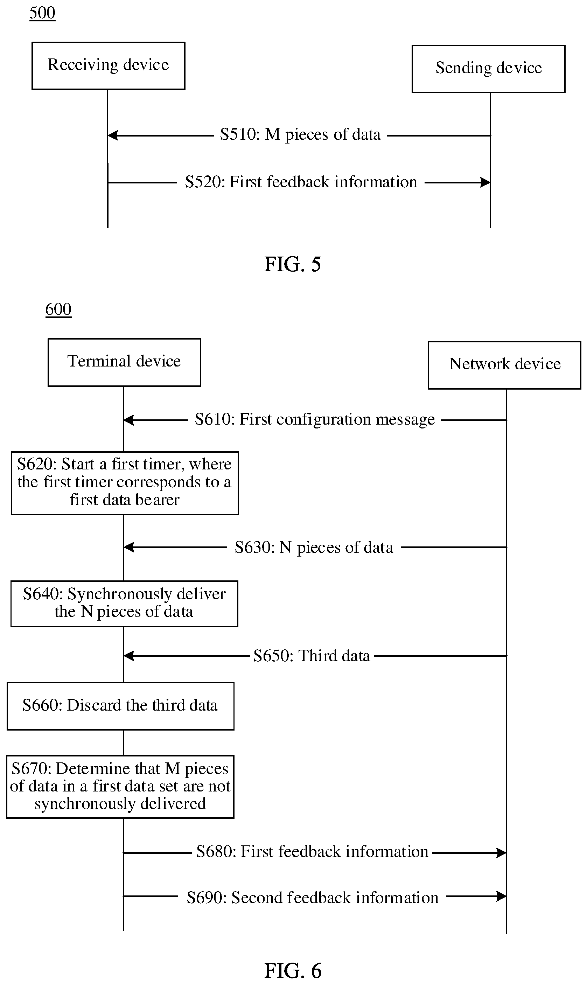

FIG. 5 is a schematic flowchart of a data transmission method 500 according to an embodiment of this application. The method 500 is a peer action to the method 200. Specifically, S510 is a peer action to S220, and S520 is a peer action to S280.

S510: Send L pieces of data to a receiving device, where the L pieces of data belong to a first data set.

S520: Receive first feedback information from the receiving device, where the first feedback information indicates that N pieces of data have been synchronously delivered by the receiving device, the N pieces of data belong to the first data set, L and N are positive integers, and N is less than or equal to L.

In some possible manners, the sending device sends trigger indication information to the receiving device, where the trigger indication information indicates the receiving device to send a synchronization delivery status to the sending device. The receiving device sends the first feedback information to the sending device based on the trigger indication information. The trigger indication information includes identification information of a data bearer, and the identification information of the data bearer indicates the receiving device to send a synchronization delivery status of the data bearer to the sending device. The trigger indication information further includes identification information of a data set or a first threshold. The first threshold is used by the receiving device to determine whether to send the first feedback information to the sending device. If N is less than or equal to the first threshold, the receiving device sends the first feedback information to the sending device; or if N is greater than the first threshold, the receiving device does not send the first feedback information to the sending device. In a possible implementation, the identification information of the data set indicates the receiving device to send a synchronization delivery status of at least one data set to the sending device. For example, if the identification information of the data set indicates a smallest SN of the data set, an SN of a data set included in the first feedback information is greater than or equal to the smallest SN of the data set (where the SN of the data set in the feedback information includes an SN of the first data set). In another possible implementation, the identification information of the data set is an identifier of the first data set.

It should be understood that, after the sending device performs S510, the receiving device correspondingly performs the method 200 and the corresponding extended implementations (which may be performed in combination), so that when a first timer expires, the receiving device synchronously delivers data (the N pieces of data) that belongs to the first data set and that is received before the first timer expires. For details about a method procedure related to synchronous delivery, refer to the foregoing corresponding implementations. Details are not described herein again.

In some possible manners, when the receiving device is a terminal device, the first feedback information indicates that the N pieces of data have been synchronously delivered by the terminal device to an upper layer of the terminal device.

In some possible manners, when the receiving device is a network device, the first feedback information indicates that the N pieces of data are delivered by the network device to a core network.

For example, the first data set includes L pieces of data. Therefore, L is greater than or equal to N. When N=L, the first feedback information indicates that all the data in the first data set is synchronously delivered. When 0<N<L, the first feedback information indicates that the N pieces of data in the first data set are synchronously delivered. When N=0, the first feedback information indicates that none of the data in the first data set is synchronously delivered.

In some possible manners, after receiving the first feedback information, the sending device dynamically adjusts a corresponding transmission policy based on the first feedback information, where the transmission policy is a scheduling policy, to provide a proper data transmission condition for data transmission. Alternatively, the sending device reduces a data bit rate based on the first feedback information, to reduce a data amount and a quantity of pieces of data in a to-be-transmitted data set, so as to adapt to a current channel condition of data transmission.

In some possible manners, the first feedback information includes a value of N, a data amount of the N pieces of data, a quantity (namely, L-N) of pieces of undelivered data in the first data set, or ratio information of synchronously delivered data in the first data set, where the ratio information indicates a proportion (namely, N/L) of N to a total quantity of pieces of data in the first data set.

In some possible manners, an example in which the data in the first data set is delivered is used. The first feedback information further includes identification information of the first data set.

It should be understood that the first feedback information in this embodiment is similar to the second feedback information in the foregoing embodiment.

Based on the foregoing technical solution, the first feedback information is used to assist the sending device in adjusting the scheduling policy. For example, when the first feedback information indicates a small quantity of pieces of synchronously delivered data, the network device adjusts the scheduling policy, to increase a transmission success rate of a subsequent data set, so as to ensure a stable (or jitter-free) delay for the subsequent data set.

In the foregoing embodiments, the data transmission method provided in embodiments of this application is separately described by using an example in which the sending device and the receiving device are execution entities. The following separately describes the data transmission method provided in embodiments of this application from a perspective of an uplink service and a perspective of a downlink service by using examples.

FIG. 6 is a schematic flowchart of a downlink data transmission method 600 according to an embodiment of this application. The method 600 is applied to a terminal device.

S610: Receive a first configuration message from a network device, where the first configuration message indicates duration of a first timer.

S620: Start the first timer, where the first timer corresponds to a first data bearer.

S630: Receive N pieces of data from the network device, where the N pieces of data belong to a first data set, the first data set corresponds to the first data bearer, and N is a positive integer.

S640: When the first timer expires, synchronously deliver the N pieces of data.

After performing S610 to S640, the terminal device may further perform the following operations.

After the first timer expires:

S650: Receive third data from the network device, where the third data belongs to the first data set.

S660: Discard the third data.

S670: Determine that M pieces of data in the first data set have not been synchronously delivered.

S680: Send first feedback information to the network device, where the first feedback information indicates that the M pieces of data have been successfully received.

S690: Send second feedback information to the network device, where the second feedback information indicates that the N pieces of data have been synchronously delivered.

It should be understood that, because the steps of the method 600 belong to the method 200 provided in the foregoing embodiment, for extended embodiments corresponding to the steps of the method 600, refer to the extended embodiments corresponding to the foregoing method 200. Details are not described herein again.

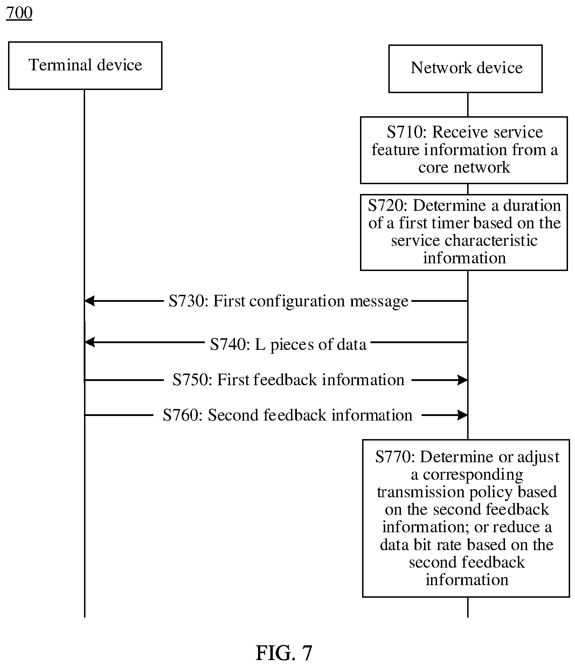

FIG. 7 is a schematic flowchart of a downlink data transmission method 700 according to an embodiment of this application. The method 700 is applied to a network device.

S710: Receive service characteristic information from a core network.

S720: Determine duration of a first timer based on the service characteristic information.

The duration of the first timer corresponds to the service characteristic information (for example, a periodicity is longer than or equal to the duration of the first timer), and the first timer corresponds to a first data bearer.

In some possible manners, during determining of the duration of the first timer, a start time of the first timer is further determined.

S730: Send a first configuration message to a terminal device, where the first configuration message indicates the duration of the first timer.

The first timer is configured to control the terminal device to synchronously deliver data in a first data set. Because the first data set is transmitted by using the first data bearer, the first data set corresponds to the first data bearer.

S740: Send L pieces of data to the terminal device, where the L pieces of data belong to the first data set.

After performing S710 to S740, the network device may further perform the following operations.

S750: Receive first feedback information from the terminal device, where the first feedback information indicates that M pieces of data have been successfully received.

The M pieces of data belong to the first data set.

Actually, the M pieces of data may be entirely received by the terminal device, or may not be entirely received by the terminal device, and the M pieces of data are not synchronously delivered by the terminal device. However, after receiving the first feedback information, the network device does not trigger a retransmission operation on the M pieces of data.

S760: Receive second feedback information from the terminal device, where the second feedback information indicates that N pieces of data have been synchronously delivered by the terminal device.

The N pieces of data belong to the first data set, and N is less than or equal to L.

S770: Determine or adjust a corresponding transmission policy based on the second feedback information; or reduce a data bit rate based on the second feedback information.

It should be understood that, because the steps of the method 700 belong to the method 500 provided in the foregoing embodiment, for extended embodiments corresponding to the steps of the method 900, refer to the extended embodiments corresponding to the foregoing method 500. Details are not described herein again.

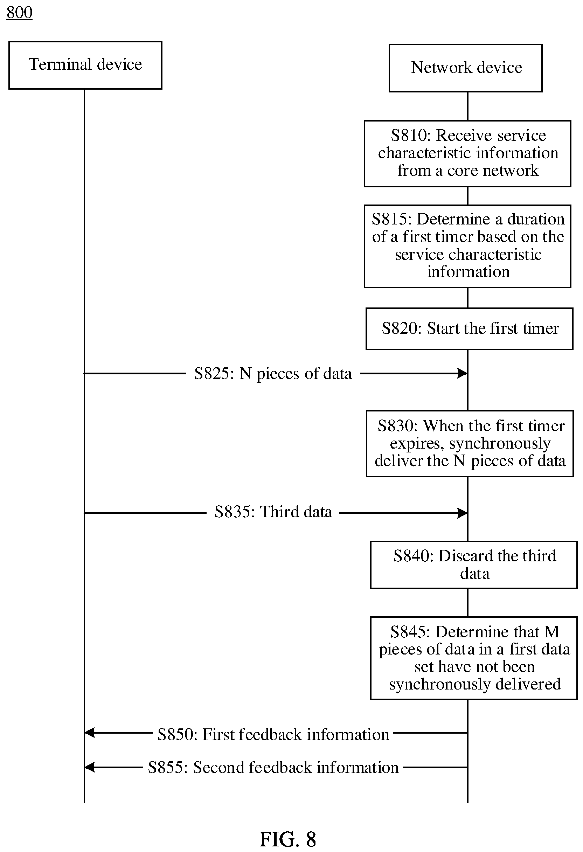

FIG. 8 is a schematic flowchart of an uplink data transmission method 800 according to an embodiment of this application. The method 800 is applied to a network device.

S810: Receive service characteristic information from a core network.

S815: Determine duration of a first timer based on the service characteristic information.

The duration of the first timer corresponds to the service characteristic information (for example, a periodicity is longer than or equal to the duration of the first timer), and the first timer corresponds to a first data bearer.

In some possible manners, during determining of the duration of the first timer, a start time of the first timer is further determined.

S820: Start the first timer.

S825: Receive N pieces of data from a terminal device, where the N pieces of data belong to a first data set, the first data set corresponds to the first data bearer, and N is a positive integer.

S830: When the first timer expires, synchronously deliver the N pieces of data.

After performing S810 to S850, the network device may further perform the following operations.

S835: Receive third data from the terminal device, where the third data belongs to the first data set.

S840: Discard the third data.

S845: Determine that M pieces of data in the first data set have not been synchronously delivered.

S850: Send first feedback information to the terminal device, where the first feedback information indicates that the M pieces of data have been successfully received.

S855: Send second feedback information to the terminal device, where the second feedback information indicates that the N pieces of data have been synchronously delivered.

It should be understood that, because the steps of the method 800 belong to the method 200 provided in the foregoing embodiment, for extended embodiments corresponding to the steps of the method 800, refer to the extended embodiments corresponding to the foregoing method 200. Details are not described herein again.

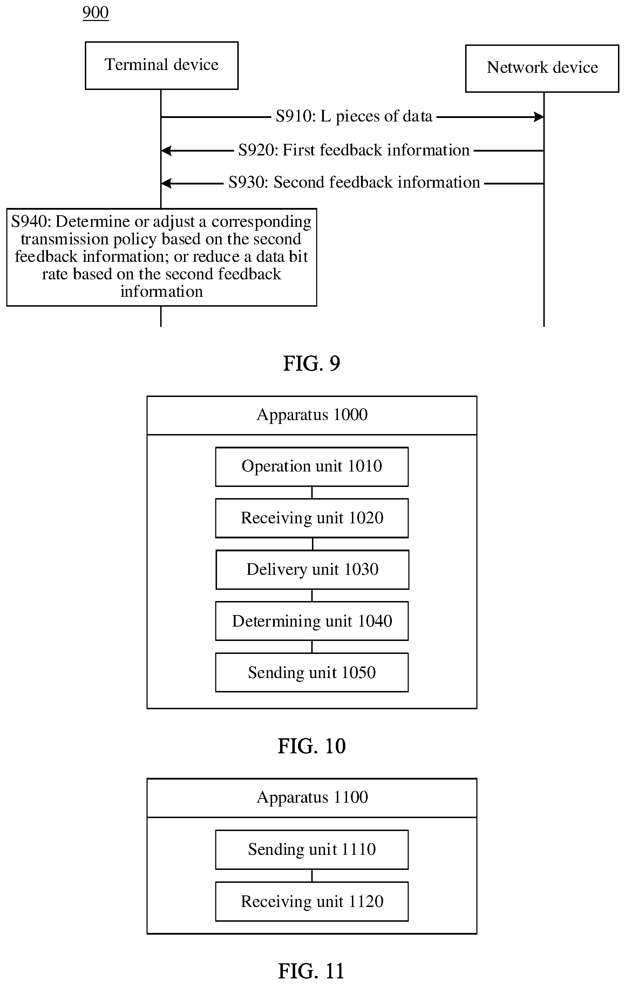

FIG. 9 is a schematic flowchart of an uplink data transmission method 900 according to an embodiment of this application. The method 900 is applied to a terminal device.

S910: Send L pieces of data to a network device, where the L pieces of data belong to a first data set.

After performing S910, the terminal device may further perform the following operations.

S920: Receive first feedback information from the network device, where the first feedback information indicates that M pieces of data have been successfully received, and the M pieces of data belong to the first data set.

It should be understood that, after receiving the first feedback information, the terminal device does not trigger a retransmission operation on the M pieces of data.

S930: Receive second feedback information from the network device, where the second feedback information indicates that N pieces of data have been synchronously delivered, the N pieces of data belong to the first data set, and N is less than or equal to L.

S940: Determine or adjust a corresponding transmission policy based on the second feedback information; or reduce a data bit rate based on the second feedback information.

It should be understood that, because the steps of the method 900 belong to the method 500 provided in the foregoing embodiment, for extended embodiments corresponding to the steps of the method 900, refer to the extended embodiments corresponding to the foregoing method 500. Details are not described herein again.

An embodiment of this application further provides an apparatus configured to implement any one of the foregoing methods. For example, a data transmission apparatus is provided. The apparatus includes a unit (or a means) configured to implement any one of the foregoing data transmission methods.

FIG. 10 is a diagram of a data transmission apparatus 1000 according to an embodiment of this application. The apparatus 1000 is used in a receiving device. The apparatus 1000 includes:
an operation unit 1010, configured to start a first timer, where the first timer corresponds to a first data bearer;
a receiving unit 1020, configured to receive N pieces of data from a sending device, where the N pieces of data belong to a first data set, the first data set corresponds to the first data bearer, and N is a positive integer; and
a delivery unit 1030, configured to: when the first timer expires, synchronously deliver the N pieces of data.

In some possible manners, when the receiving device is a terminal device, the receiving unit 1020 is further configured to receive a first configuration message from the sending device, where the first configuration message indicates the duration of the first timer.

In some possible manners, the N pieces of data include first data and second data, and the delivery unit 1030 is specifically configured to synchronously deliver the first data and the second data to an upper layer of the terminal device.

In some possible manners, when the receiving device is a network device, the receiving unit 1020 is further configured to receive service characteristic information from a core network, where the service characteristic information corresponds to the first data set. The apparatus 1000 further includes a determining unit 1040, and when the receiving device is a network device, the determining unit 1040 is configured to determine the duration of the first timer based on the service characteristic information.

In some possible manners, the N pieces of data include first data and second data, and the delivery unit 1030 is specifically configured to synchronously deliver the first data and the second data to the core network.

In some possible manners, the receiving unit 1020 is further configured to: after the first timer expires, receive third data from the sending device, where the third data belongs to the first data set; and the operation unit 1010 is further configured to discard the third data.

In some possible manners, the determining unit 1040 is further configured to: after the first timer expires, determine that M pieces of data in the first data set have not been synchronously delivered. The apparatus 1000 further includes a sending unit 1050, configured to send first feedback information to the sending device, where the first feedback information indicates that the M pieces of data have been successfully received.

In some possible manners, the determining unit 1040 is further configured to determine, based on identification information that is of the first data set and that is included in data headers corresponding to the N pieces of data, that the N pieces of data belong to the first data set.

In some possible manners, the sending unit 1050 is further configured to: after the first timer expires, send second feedback information to the sending device, where the second feedback information indicates that the N pieces of data have been synchronously delivered.

In some possible manners, the second feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

In some possible manners, the second feedback information further includes the identification information of the first data set.

In some possible manners, the determining unit 1040 is further configured to determine a moment at which a 1^{st} piece of data in the first data set is received as a start time of the first timer.

In some possible manners, when the receiving device is a terminal device, the receiving unit 1020 is further configured to receive a second configuration message from the sending device, where the second configuration message indicates a start time of the first timer.

In some possible manners, when the receiving device is a network device, the determining unit 1040 is further configured to determine a start time of the first timer based on the service characteristic information.

FIG. 11 is a diagram of a data transmission apparatus 1100 according to an embodiment of this application. The apparatus 1100 is used in a sending device. The apparatus 1100 includes:
a sending unit 1110, configured to send L pieces of data to a receiving device, where the L pieces of data belong to a first data set; and
a receiving unit 1120, configured to receive first feedback information from the receiving device, where the first feedback information indicates that N pieces of data have been synchronously delivered by the receiving device, the N pieces of data belong to the first data set, L and N are positive integers, and N is less than or equal to L.

In some possible manners, when the sending device is a network device, the sending unit 1110 is further configured to send a first configuration message to the receiving device, where the first configuration message indicates duration of a first timer, and the first timer is configured to control the receiving device to synchronously deliver data in the first data set.

In some possible manners, when the receiving device is a terminal device, the first feedback information indicates that the N pieces of data have been synchronously delivered by the terminal device to an upper layer of the terminal device.

In some possible manners, when the receiving device is a network device, the first feedback information indicates that the N pieces of data are delivered by the network device to a core network.

In some possible manners, data headers corresponding to the L pieces of data include identification information of the first data set.

In some possible manners, the first feedback information includes a value of N, a data amount of the N pieces of data, a quantity of pieces of undelivered data in the first data set, or ratio information of synchronously delivered data in the first data set, where the ratio information indicates a proportion of N to a total quantity of pieces of data in the first data set.

In some possible manners, the first feedback information further includes the identification information of the first data set.

In some possible manners, when the sending device is a network device, the sending unit 1110 is further configured to send a second configuration message to the receiving device, where the second configuration message indicates a start time of the first timer.

In some possible manners, the first timer corresponds to a data bearer of the first data set.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, a network device, or the like) to perform all or some of the steps of the methods described in embodiments of this application. The foregoing storage medium includes any medium that can store program code, for example, a USB flash drive, a portable hard drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a receiving device, and the method comprises:
starting a first timer, wherein the first timer corresponds to a first data bearer;
receiving N pieces of data from a sending device, wherein the N pieces of data belong to a first data set, the first data set corresponds to the first data bearer, and N is a positive integer; and
when the first timer expires, synchronously delivering the N pieces of data.

2. The method according to claim 1, wherein when the receiving device is a terminal device, the method further comprises:
receiving a first configuration message from the sending device, wherein the first configuration message indicates a duration of the first timer.

3. The method according to claim 2, wherein the N pieces of data comprise first data and second data, and the synchronously delivering the N pieces of data comprises:
synchronously delivering the first data and the second data to an upper layer of the terminal device.

4. The method according to claim 1, wherein when the receiving device is a network device, the method further comprises:
receiving service characteristic information from a core network, wherein the service characteristic information corresponds to the first data set; and
determining a duration of the first timer based on the service characteristic information.

5. The method according to claim 4, wherein the N pieces of data comprise first data and second data, and the synchronously delivering the N pieces of data comprises:
synchronously delivering the first data and the second data to the core network.

6. The method according to any one of claims 1 to 5, wherein the method further comprises:
after the first timer expires, receiving third data from the sending device, wherein the third data belongs to the first data set; and
discarding the third data.

7. The method according to any one of claims 1 to 6, wherein the method further comprises:
after the first timer expires, determining that M pieces of data in the first data set have not been synchronously delivered; and
sending first feedback information to the sending device, wherein the first feedback information indicates that the M pieces of data have been successfully received.

8. The method according to any one of claims 1 to 7, wherein the method further comprises:
determining, based on identification information that is of the first data set and that is comprised in data headers corresponding to the N pieces of data, that the N pieces of data belong to the first data set.

9. The method according to any one of claims 1 to 8, wherein after the first timer expires, the method further comprises:
sending second feedback information to the sending device, wherein the second feedback information indicates that the N pieces of data have been synchronously delivered.

10. The method according to claim 9, wherein the second feedback information comprises a value of N, a data amount of the N pieces of data, a quantity of pieces of undelivered data in the first data set, or ratio information of synchronously delivered data in the first data set, wherein the ratio information indicates a proportion of N to a total quantity of pieces of data in the first data set.

11. The method according to claim 9 or 10, wherein the second feedback information further comprises the identification information of the first data set.

12. The method according to any one of claims 1 to 11, wherein the method further comprises:
determining a moment at which a 1^{st} piece of data in the first data set is received as a start time of the first timer.

13. The method according to any one of claims 1 to 11, wherein when the receiving device is a terminal device, the method further comprises:
receiving a second configuration message from the sending device, wherein the second configuration message indicates a start time of the first timer.

14. The method according to claim 4 or 5, wherein when the receiving device is a network device, the determining the duration of the first timer based on the service characteristic information comprises:
determining a start time of the first timer based on the service characteristic information.

15. A data transmission method, applied to a sending device, wherein the method comprises:
sending L pieces of data to a receiving device, wherein the L pieces of data belong to a first data set; and
receiving first feedback information from the receiving device, wherein the first feedback information indicates that N pieces of data have been synchronously delivered by the receiving device, the N pieces of data belong to the first data set, L and N are positive integers, and N is less than or equal to L.

16. The method according to claim 15, wherein when the sending device is a network device, the method further comprises:
sending a first configuration message to the receiving device, wherein the first configuration message indicates a duration of a first timer, and the first timer is configured to control the receiving device to synchronously deliver data in the first data set.

17. The method according to claim 16, wherein the receiving device is a terminal device, and the first feedback information indicates that the N pieces of data have been synchronously delivered by the terminal device to an upper layer of the terminal device.

18. The method according to claim 15, wherein when the receiving device is a network device, the first feedback information indicates that the N pieces of data are delivered by the network device to a core network.

19. The method according to any one of claims 15 to 18, wherein data headers corresponding to the L pieces of data comprise identification information of the first data set.

20. The method according to any one of claims 15 to 19, wherein the first feedback information comprises a value of N, a data amount of the N pieces of data, a quantity of pieces of undelivered data in the first data set, or ratio information of synchronously delivered data in the first data set, wherein the ratio information indicates a proportion of N to a total quantity of pieces of data in the first data set.

21. The method according to any one of claims 15 to 20, wherein the first feedback information further comprises the identification information of the first data set.

22. The method according to claim 16 or 17, wherein when the sending device is a network device, the method further comprises:
sending a second configuration message to the receiving device, wherein the second configuration message indicates a start time of the first timer.

23. The method according to claim 16 or 17, wherein the first timer corresponds to a data bearer of the first data set.

24. A data transmission apparatus, comprising a module configured to implement the method according to any one of claims 1 to 23.

25. A data transmission apparatus, comprising:
a memory, configured to store computer instructions; and
a processor, configured to execute the computer instructions stored in the memory, to cause the apparatus to perform the method according to any one of claims 1 to 23.

26. A chip, comprising a processor, wherein the processor is configured to perform the method according to any one of claims 1 to 23.

27. A computer-readable storage medium, wherein the computer-readable storage medium stores computer instructions, and when the instructions are executed on a computer, an apparatus is caused to perform the method according to any one of claims 1 to 23.

28. A computer program product, wherein the computer program product comprises a computer program or instructions, and when the computer program or the instructions are executed by a computer, an apparatus is caused to perform the method according to any one of claims 1 to 23.
